# EUROPÄISCHE PATENTSCHRIFT

(11) **EP 3 720 791 B1**
(45) Veröffentlichungstag und Bekanntmachung des Hinweises auf die Patenterteilung: **09.04.2025**
(21) Anmeldenummer: 18822293.9
(22) Anmeldetag: 10.12.2018
(51) Int. Cl.: B65G 43/00, G05B 19/418

(54) **STEUERVORRICHTUNG FÜR EINE FÖRDERVORRICHTUNG**
CONTROL DEVICE FOR A CONVEYOR DEVICE
DISPOSITIF DE COMMANDE POUR UN DISPOSITIF DE REFOULEMENT

(30) Priorität: 08.12.2017 DE 102017129318
(43) Veröffentlichungstag der Anmeldung: 14.10.2020
(73) Patentinhaber: Interroll Holding AG, 6592 Sant'Antonino (CH)
(72) Erfinder: HENZE, Herbert, 6592 Sant' Antonino (CH)
(74) Vertreter: Kohlhof, Stephan
(86) Internationale Anmeldenummer: PCT/EP2018/084096
(87) Internationale Veröffentlichungsnummer: WO 2019/110841

(56) Entgegenhaltungen:
- EP-A1- 0 891 008
- DE-B3- 102009 011 225

## Beschreibung

Die Erfindung betrifft eine Steuerungsvorrichtung für eine Fördervorrichtung gemäß Anspruch 1.

Fördervorrichtungen dienen allgemein dazu Fördergüter entlang einer Förderstrecke zu bewegen. Unter einer Fördervorrichtung im erfindungsgemäßen Sinne sind allgemein Vorrichtungen zu verstehen, die ausgebildet sind, um eine solche Förderaufgabe zu leisten. Insbesondere sind hierunter Fördervorrichtungen zu verstehen, die aufgebaut sind aus einer Förderstrecke, in die mehrere Förderrollen eingesetzt sind, von denen einige motorbetrieben sind, um ein auf den Förderrollen aufliegendes Fördergut entlang der Förderstrecke zu befördern.

Für Fördervorrichtungen ist es bekannt, die Fördereinrichtungen, also beispielsweise die motorbetriebene Förderrolle, über eine Steuerungsvorrichtung anzusteuern. Die Steuerungsvorrichtung übernimmt hierbei typischerweise die Übermittlung von Steuersignalen an die Fördereinrichtung, also beispielsweise ein Start-Stoppsignal, ein Geschwindigkeitssignal um die Geschwindigkeit der Fördereinrichtung zu steuern. Logische Steuerungsabläufe, beispielsweise nach Art eines Blockabzugs entlang der Förderstrecke oder nach Art eines Einzelplatzabzugs entlang der Förderstrecke, werden durch diese Steuerungseinrichtungen mittels dieser Signaleinrichtung gesteuert. Es ist weiterhin bekannt, die Fördereinrichtung auch über die Steuerungsvorrichtung mit der notwendigen Energie zur Durchführung des Fördervorgangs zu versorgen, also der Antriebsenergie für den Motor, der die Förderwirkung bewirkt. Oftmals erfolgt diese Versorgung mit Energie über eine mehradrige Leitung, die zugleich auch der Steuerungssignalübertragung dient, grundsätzlich kann dies aber auch durch getrennte Leitungen und entsprechend getrennte Anschlüsse erfolgen.

Während sich ein solcher Aufbau von Fördervorrichtungen aufgrund der damit erreichten systematisch guten Konfiguration für die Installation, Wartung und die Austauschbarkeit von defekten Komponenten bewährt hat, liegt eine Problematik, die in diesem Systemaufbau immanent ist, darin, dass unterschiedliche Anforderungen an die Energieversorgung für steuerungslogische Aufgaben in der Fördervorrichtung einerseits und Leistungsanforderungen für die eigentliche Förderleistung andererseits gestellt werden. Im Bereich der logischen Steuerung ist es für den wirtschaftlichen und aus Bedienersicht arbeitssicheren Aufbau bevorzugt, mit geringen Spannungen und Strömen die logischen Funktionen durchzuführen. Demgegenüber ist es im Bereich der Leistungsversorgung zur Erzielung hoher Förderleistungen wünschenswert, hohe Energien zu übertragen, insbesondere eine hohe Spannung zu übertragen, um eine Stromstärkenerhöhung mit der damit einhergehenden Notwendigkeit einer Querschnittserhöhung der Versorgungsleitungen vermeiden zu können.

Begegnet man diesen unterschiedlichen Anforderungen mit einer Konfiguration, bei der eine hohe Spannung zur Leistungsversorgung und eine niedrige Spannung zur Logikversorgung eingesetzt wird, löst dies verschiedene Probleme aus. Zum einen ist die für den einfachen Systemaufbau vorteilhafte Anschlussweise mit einer direkten Beaufschlagung der Fördereinrichtung mit Energie- und Steuerungssignalen aus der Steuerungsvorrichtung bei einer solchen getrennten Spannungsversorgung mit einem unerwünschten zusätzlichen Aufwand verbunden. Zudem tritt eine Notwendigkeit einer zusätzlichen Verkabelung auf, die die Installation und Planung und den Austausch von Komponenten der Fördervorrichtung erschwert. Weiterhin problematisch gestaltet sich die Ausführung von sicherheitsrelevanten Funktionen, wie einer Notabschaltfunktion. Grundsätzlich ist es wünschenswert, Fördervorrichtungen, an denen Bediener tätig sind, durch eine rasche Notabschaltfunktion bewegungslos schalten zu können, zugleich aber ein schnelles Wiederanläufen mit Sicherstellung der Fortführung der steuerungslogischen Programmierung vor der Notabschaltung zu erreichen. Die Implementation einer solchen Notabschaltfunktion bei Verwendung von mehreren Versorgungsspannungen erfordert daher zusätzlichen Aufwand, der sich wiederum in Kosten bei der Herstellung, Installation und Wartung der Förderrichtung niederschlagen kann. Schließlich liegt ein Nachteil bei der Bereitstellung von zwei Spannungen darin, dass bei der Montage Fehlanschlüsse erzeugt werden können, welche potenziell dazu führen können, dass die hohe Spannung eine Überlastungsversorgung von Logikeinheiten oder peripher in der Fördervorrichtung eingesetzten Baueinheiten auslöst, was zur Beschädigung dieser Baueinheiten bzw. der Logikeinheiten führen kann. Ein weiteres Problem liegt darin, dass einerseits innerhalb einer einzigen Fördervorrichtung Förderstrecken vorhanden sein können, die hohe Anforderungen an die Förderleistung haben, aber auch Förderstrecken vorliegen können, die keine solch hohen Anforderungen an die Förderleistung haben und daher den Einsatz kostengünstiger Fördereinrichtungen mit geringer Förderleistung erlauben. Des Weiteren werden Steuerungsvorrichtungen für Fördervorrichtungen eingesetzt, die insgesamt hohe Ansprüche an die Förderleistung haben, aber auch für Fördervorrichtungen, die nur geringe Anforderungen an die Förderleistung haben und es daher erlauben, Fördereinrichtungen mit geringer Förderleistung einzusetzen, die zu geringeren Koste hergestellt werden können. EP 0 891 008 A1 offenbart ein Energieverteilungssystem mit einer Sammelschiene und mit mindestens einem Abzweig zur Versorgung eines Verbrauchers. Die Sammelschiene ist als Flachkabel mit einer Anzahl von nebeneinander angeordneten Leitungsadern zur Energie- und Datenübertragung ausgeführt. Der Abzweig ist als kommunikationsfähiger Verbraucherabzweig in ein Gehäuse integriert, das verbraucherspezifische Funktionalitäten enthält und eine nach dem Prinzip der Durchdringungstechnik arbeitende Kontaktierungseinrichtung aufweist.

EP 3 674 234 A1 stellt nachveröffentlichten Stand der Technik nach Art. 54(3) EPÜ dar und offenbart eine Anordnung mit einer motorbetriebenen Förderrolle und einer Steuerungseinheit. Die Steuerungseinheit umfasst einen ersten Spannungseingangsanschluss zum Anschluss an eine erste Energieversorgungsleitung, einen zweiten Spannungseingangsanschluss zum Anschluss an eine zweite Energieversorgungsleitung, einen ersten Spannungsausgangsanschluss zum Anschluss der Energieversorgungsleitung für eine Antriebseinheit der motorbetriebenen Förderrolle, einen zweiten Spannungsausgangsanschluss ausgebildet zum Anschluss einer Energieversorgungsleitung für einen Sensor oder einen Aktuator. Zwischen den Spannungseingangsanschlüssen und den Spannungsausgangsanschlüssen ist ein elektronischer Spannungsregelungs-Schaltkreis angeordnet. Dieser Schaltkreis stellt an den Spannungsausgangsanschlüssen jeweils die Spannung bereit, die der jeweils an dem Spannungsausgangsanschluss angeschlossene Verbraucher erfordert.

Der Erfindung liegt die Aufgabe zugrunde, eine Fördervorrichtung bereit zu stellen, welche eine hohe Förderleistung unter Vermeidung oder zumindest Verringerung dieser Nachteile erzielt.

Die Aufgabe wird erfindungsgemäß gelöst durch eine Steuerungsvorrichtung nach Anspruch 1. Ausgestaltungen sind Gegenstand der Unteransprüche sowie der Beschreibung.

Die Steuerungsvorrichtung weist eine erste und eine zweite Energieschnittstelle auf.

Die erste Schnittstelle ist dazu ausgebildet, eine erste Spannung zu empfangen. Die zweite Schnittstelle ist dazu ausgebildet eine zweite Spannung oder anstelle der zweiten Spannung eine dritte Spannung, die verschieden von der zweiten Spannung ist, zu empfangen. Demzufolge wird eine erste Schnittstelle, die zur Versorgung einer Steuerungseinheit dient, die logische Steuerungsschritte ausführt, verwendet, die eine erste Spannung mit geringer Höhe empfangen kann. Die zweite Schnittstelle dient dazu, die zur Leistungsversorgung der Fördereinrichtung notwendige Spannung zu empfangen, sie ist ausgebildet, um wahlweise zwei unterschiedliche Spannungen, nämlich 24V oder 48V, zu empfangen, sodass ein Antrieb mit diesen zwei unterschiedlichen auswählbaren Spannungen als Leistungsversorgung möglich wird. Dies stellt zum einen sicher, dass die erfindungsgemäße Steuerungsvorrichtung in der Lage ist, auch in konventioneller Weise eine niedrige, zweite Spannung als

Leistungsversorgungspannung zu verwenden, alternativ hierzu aber auch eine hohe, dritte Spannung als Leistungsversorgungspannung zu verwenden und eine entsprechend hohe Förderleistung zu erzielen. Dies ermöglicht es, dass die erfindungsgemäße Steuerungsvorrichtung für konventionelle Steuerungsaufgaben mit keiner besonderen Anforderung an die Förderleistung eingesetzt wird, zugleich aber auch einsetzbar ist, um Förderaufgaben mit hohen Ansprüchen an die Förderleistung zu steuern. Dies wird erreicht, ohne dass hierzu eine Anpassung der steuerungslogischen Bauelemente innerhalb der Steuerungsvorrichtung notwendig ist, sodass eine einheitliche Gestaltung und Fertigung der logischen Steuerungsbauteile sichergestellt ist.

Die zweite bzw. dritte Spannung wird direkt an die Anschlussschnittstelle weitergeleitet, um eine daran angeschlossene Fördereinrichtung zu versorgen.

Mit der erfindungsgemäßen Steuerungsvorrichtung wird es möglich, eine Logikspannungsversorgung und eine Leistungsspannungsversorgung getrennt zu führen und zu schalten. Die Leistungsspannungsversorgung kann hierbei zwei unterschiedliche Spannungshöhen annehmen, wodurch es grundsätzlich möglich wird, kostengünstige Fördereinrichtungen mit einer niedrigen und leistungsfähige Fördereinrichtungen mit einer hohen Spannung zu versorgen. Die erfindungsgemäße Steuerungsvorrichtung eignet sich daher zum Aufbau von Fördersystemen mit solch kostengünstigen Fördereinrichtungen und zum Aufbau von Fördersystemen mit leistungsfähigen Fördereinrichtungen und kann auch innerhalb eines Fördersystems genutzt werden, um mit einer Steuerungsvorrichtung eine kostengünstige Fördereinrichtung und mit einer anderen Steuerungsvorrichtung eine leistungsfähige Fördereinrichtung anzusteuern und mit Leistung zu versorgen, wenn diesen Steuerungsvorrichtungen die entsprechende Leistungsspannungsversorgung zugeführt wird. Möglich wird weiterhin, im Rahmen einer Notabschaltung nur die Leistungsspannungsversorgung abzuschalten, die Logikspannungsversorgung an der ersten Energieschnittstelle jedoch aufrechtzuerhalten und dadurch einen schnellen Neustart des Fördersystems zu ermöglichen, ohne das hierzu Initialisierungsdaten und Übertragungsprozesse ausgeführt werden müssen.

Unter einer Schnittstelle ist hierbei im Allgemeinen die Möglichkeit eines Anschlusses im Sinne der Herstellung einer Verbindung zur Übertragung zu verstehen. Dies kann eine konventionelle Buchse-Steckerverbindung sein und die Steuerungsvorrichtung zu diesem Zweck eine Buchse oder einen Stecker aufweisen. Dies kann auch eine anders ausgeführte Anbindung eines Kabels, beispielsweise mit Durchdringungsstiftkontakten sein. Insbesondere für die Signaldaten übertragende Schnittstelle der Erfindung kann auch eine drahtlose Schnittstelle vorgesehen sein. Grundsätzlich kann eine Schnittstelle gemäß der Erfindung durch ein integrales Anschlusselement beziehungsweise Datenübertragungsprotokoll ausgeführt sein, ebenso aber auch durch zwei oder mehr voneinander getrennte Anschlusselemente bereitgestellt sein. Ebenso können zwei oder mehr Schnittstellen der Erfindung in einem Anschlusselement beziehungsweise einem Datenübertragungsprotokoll zusammengefasst sein. Die Schnittstellen der Erfindung sind so zu verstehen, dass Sie als reine Eingangs- oder reine Ausgangsschnittstellen ausgeführt sein können, ebenso aber auch und bevorzugt als I-/ O-Schnittstellen, die sowohl Eingang wie Ausgang von Daten und/ oder Leistung ermöglichen. Dies ermöglicht einerseits eine Kommunikation der erfindungsgemäßen Steuerungsvorrichtung mit daran angeschlossenen Peripheriegeräten in beiden Richtungen oder mit einer übergeordneten oder nebengeordneten Steuerungseinheit. Ebenso ermöglicht dies, dass über die erfindungsgemäße Steuerungsvorrichtung eine Leistung einer Fördereinrichtung zugeführt wird, ebenso auch Leistung aus einer Fördereinrichtung in ein Versorgungsnetz zurückgespeist wird, beispielsweise im Zuge eines Abbremsvorgangs, bei dem die Fördereinrichtung elektrische Energie generiert.

Gemäß einer ersten bevorzugten Ausführungsform ist vorgesehen, dass die Steuerungseinheit ausgebildet ist, um Steuerungsfunktionen mit der ersten Spannung auszuführen und um die an der zweiten Schnittstelle zugeführte zweite bzw. dritte Spannung über die Anschlussschnittstelle als Energieversorgung der Fördervorrichtung zuzuführen.

Gemäß dieser Ausführungsform wird die erste Spannung dazu verwendet, um logische und steuerungstechnische Funktionen der Steuerungsvorrichtung durchzuführen und die zweite beziehungsweise dritte Spannung dazu eingesetzt, um die Fördereinrichtung mit Energie zu versorgen, also eine Antriebsenergie bereitzustellen. Dies schließt nicht aus, dass die zweite beziehungsweise dritte Spannung auch dazu eingesetzt wird, um logische Vorgänge innerhalb der Fördereinrichtungen mit Energie zu versorgen.

Gemäß einer weiteren bevorzugten Ausführungsform ist vorgesehen, dass die Steuerungseinheit eine elektronische Fehlererkennungseinheit umfasst, die ausgebildet ist, um mit einer Spannung in Höhe der zweiten oder dritten Spannung aus der ersten Schnittstelle versorgt zu werden und eine Fehlanschlussfunktion zu erzeugen, wenn an der ersten Schnittstelle eine Spannung zugeführt wird, deren Höhe von der Höhe der ersten Spannung verschieden ist.

Diese Ausführungsform adressiert eine spezifische Problematik, die bei der Erfindung auftreten kann, wenn unterschiedliche Spannungen an die erste und zweite Energieschnittstelle angeschlossen werden. Grundsätzlich kann durch verschiedene Fehlanschlussweisen oder Fehlverschaltungsweisen hierbei eine versehentliche Beaufschlagung der ersten Schnittstelle mit einer der zweiten oder der dritten Spannung erfolgen. Dies löst potenziell die Gefahr aus, dass die Steuerungseinheit Schaden nimmt oder aus der ersten Energieschnittstelle versorgte Bauteile Schaden nehmen. Um dieser Gefahr zu begegnen umfasst die Steuerungseinheit eine elektronische Fehlererkennungseinheit, die so ausgelegt ist, dass sie durch Versorgung mit der zweiten oder dritten Spannung keinen Schaden nimmt, sondern eine Fehlanschlussfunktion erzeugt. Diese Fehlanschlussfunktion kann generell eine Funktion sein, die die Spannung, die an der ersten Energieschnittstelle anliegt, mindert, blockiert, zu anderen, empfindlichen Bauelementen der Steuerungseinheit nicht zuführt, sondern sperrt oder sonstige Schutzfunktionen beinhaltet. Grundsätzlich ist zu verstehen, dass die Fehlanschlussfunktion eine solche Funktion sein soll, die eine Beschädigung der erfindungsgemäßen Steuerungsvorrichtung verhindert. Diese Verhinderung kann durch eine manuell rückzusetzende Fehlanschlussfunktion erzielt werden, beispielsweise eine Sicherung, oder kann automatisch bei Wegfall der zweiten beziehungsweise dritten Spannung an der ersten Energieschnittstelle erzeugt werden.

Dabei ist es besonders bevorzugt, wenn die Fehlanschlussfunktion bewirkt, dass die Spannung in Höhe der zweiten bzw. dritten Spannung nicht an eine logische Steuerungsschaltung, die in die Steuerungseinheit integriert und zur Steuerung der Fördervorrichtung ausgebildet ist, weitergeleitet wird. Gemäß dieser Ausführungsform wird durch die Fehlanschlussfunktion die Beaufschlagung einer spannungssensiblen logischen Steuerungsschaltung, die in der Steuerungseinheit enthalten ist, mit der fehlerhaften Spannung blockiert und hierdurch eine Beschädigung der relevanten logischen Bauelemente innerhalb der Steuerungseinheit verhindert.

Noch weiter ist es dabei bevorzugt, wenn die Erfindung fortgebildet wird durch eine Peripherieanschlussschnittstelle, die ausgebildet ist zum Herstellen einer Signalsteuerungsverbindung und einer Energieversorgungsverbindung zwischen der Steuerungseinheit und einer außerhalb der Steuerungsvorrichtung angeordneten Peripherieeinheit, insbesondere einem Sensor, wobei die Fehlanschlussfunktion bewirkt, dass die Spannung in Höhe der zweiten bzw. dritten Spannung nicht über die Peripherieanschlussschnittstelle an die Peripherieeinheit weitergeleitet wird.

Gemäß dieser Fortbildung versorgt die Steuerungsvorrichtung auch ein oder mehrere Peripheriegeräte über eine oder entsprechend mehrere Peripherieanschlussschnittstellen. Diese Versorgung erfolgt dabei bevorzugt über die erste Spannung aus der ersten Energieschnittstelle. Die Fehlanschlussfunktion bewirkt, dass fehlerhafte Spannung, die an der ersten Energieschnittstelle anliegt, nicht an ein solches Peripheriegerät durchgeleitet wird und verhindert hierdurch die Beschädigung des Peripheriegeräts.

Dabei ist vorgesehen, dass die Höhe der dritten Spannung größer ist als die Höhe der zweiten Spannung, nämlich doppelt so hoch.

Durch eine solche Erhöhung beziehungsweise Verdoppelung wird die vorteilhafte Wirkung einer verstärkten Förderleistung erreicht, insbesondere werden bei einer Verdopplung vorteilhafte Verschaltungsfunktionen ermöglicht, die beispielsweise auch Notlauffunktionen durch eine Halbierung der dritten Spannung, um hierdurch auf die zweite Spannung zu gelangen, beinhalten können.

Noch weiter ist es bevorzugt, dass die Höhe der zweiten Spannung und die Höhe der ersten Spannung gleich ist.

Gemäß dieser Fortbildungsform wird erreicht, dass die Spannung zur Versorgung der steuerungstechnischen Elemente und die Leistungsversorgungsspannung in Höhe der zweiten Spannung identisch sind, wodurch die Steuerungsvorrichtung kompatibel wird zum Einsatz zahlreicher Peripheriegeräte und Fördereinrichtungen bei denen eine einheitliche Spannung für Steuerungszwecke und Förderleistungszwecke verwendet wird.

Die Fördereinrichtung ist eine motorbetriebene Förderrolle.

Eine motorbetriebene Förderrolle zeichnet sich dadurch aus, dass eine kompakte Anschlussmöglichkeit mit Steuerungs- und Energieversorgung für die Förderleistung vorgesehen sein muss, die über eine einheitliche Schnittstelle oder über zwei getrennte Schnittstellen ausgeführt wird. Förderrollen benötigen daher zum Zwecke einer hohen Förderleistung eine bevorzugt hohe Spannung zur Förderleistungsversorgung, erfordern aber zugleich für jegliche steuerungstechnische Ansteuerungen eine kompakte Bauweise von in der Förderrolle integrierten Steuerungselementen, die insbesondere durch eine niedrige Spannung für Steuerungszwecke erzielt werden kann.

Grundsätzlich ist es weiter bevorzugt, dass die Anschlussschnittstelle durch eine Logikanschlussschnittstelle und eine hiervon getrennte Energieanschlussschnittstelle gebildet wird oder dass die Anschlussschnittstelle eine Logikanschlussschnittstelle und eine Energieanschlussschnittstelle integral umfasst.

Gemäß dieser Ausführungsform wird der steuerungstechnische Anschluss der Fördereinrichtung und der Leistungsanschluss der Fördereinrichtung entweder über getrennte Schnittstellen oder über eine integrale Schnittstelle ausgeführt.

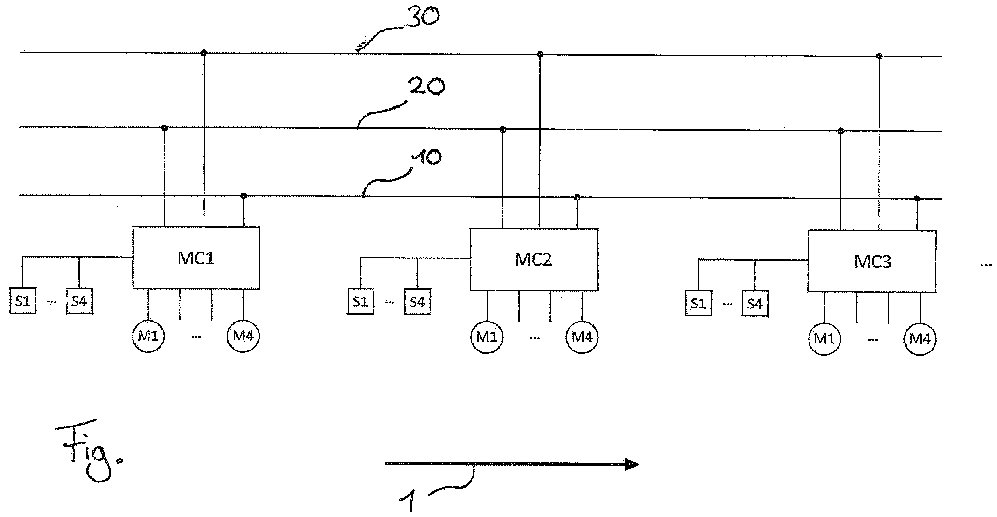

Eine bevorzugte Ausführungsform der Erfindung wird anhand der beiliegenden Figur näher erläutert. Die Figur zeigt ein schematisches Schaltbild eines Ausschnitts einer erfindungsgemäßen Fördervorrichtung.

Der in der Figur gezeigte Ausschnitt stellt das schematische Schaltbild eines Förderstreckenabschnitts innerhalb einer Fördervorrichtung dar. Der Förderstreckenabschnitt erstreckt sich entlang eines Pfeils 1 , der die Förderrichtung charakterisiert. Entlang des Förderstreckenabschnitts sind eine Mehrzahl von motorbetriebenen Förderrollen M1 ... M4 angeordnet. Jede der motorbetriebenen Förderrollen ist dabei mit einer Steuerungseinheit MC1 ... MC3 verbunden, um durch diese gesteuert zu werden.

Insgesamt sind in dem in der Figur abgebildeten Abschnitt drei Steuerungseinheiten MC1 , MC2, MC3 dargestellt, an denen jeweils eine bis vier motorbetriebene Förderrollen M1 ... M4 angeschlossen sind. Diese insgesamt bis zu zwölf motorbetriebenen Förderrollen im dargestellten Ausschnitt der Fördervorrichtung werden aus der jeweiligen Steuerungseinheit MC1 , MC2, MC3 sowohl mit der notwendigen elektrischen Energie, die für den Antrieb der motorbetriebenen Förderrolle notwendig ist, versorgt als auch mit Steuerungsdaten angesteuert, um Anlaufvorgänge, Bremsvorgänge, Fördergeschwindigkeiten und dergleichen für jede der motorbetriebenen Förderrollen zu steuern. Grundsätzlich kann auch aus der motorbetriebenen Förderrolle ein Signal an die Steuerungseinheit übermittelt werden, um hierdurch als Eingangssignal in den Steuerungsprozess oder in übergeordnete Prozesse außerhalb der Steuerungseinheit eingeführt zu werden.

Neben den motorbetriebenen Förderrollen M1 ... M4 ist es möglich, dass an jeder der Steuerungseinheiten MC1 , MC2, MC3 auch bis zu vier Sensoren S1 ... S4 angeschlossen werden. Diese Sensoren S1 ... S4 werden wiederum sowohl signaltechnisch als auch energietechnisch mit der Steuerungseinheit MC1 , MC2, MC3 gekoppelt, sodass ein etwaiger Bedarf an elektrischer Energie für den Betrieb des Sensors aus der Steuerungseinheit zu dem Sensor geführt wird und Signale von dem Sensor oder zu dem Sensor ebenfalls über die Steuerungseinheit geführt werden. Grundsätzlich ist zu verstehen, dass sowohl die Signalleitung der Sensoren S1 ... S4 als auch die Signalleitung der motorbetriebenen Förderrollen M1 ... M4 als analoges Signal oder als digitales Signal erfolgen kann. Die signaltechnische Kopplung zwischen den Sensoren und der Steuerungseinheit und den motorbetriebenen Förderrollen und der Steuerungseinheit kann folglich durch eine analoge Signalleitung oder durch eine digitale Signalleitung wie beispielsweise eine Busleitung ausgeführt sein. Insbesondere ist es auch möglich, dass die Steuerungseinheit ausgebildet ist, um sowohl eine analoge Signalkopplung zu einem Sensor oder einer motorbetriebenen Förderrolle als auch eine digitale Signalkopplung zu einem Sensor oder einer motorbetriebenen Förderrolle auszuführen, was durch entsprechend adaptive Schnittstellen oder durch mehrere alternative Schnittstellen ausgeführt sein kann.

Die Steuerungseinheiten MC1 , MC2, MC3 sind signaltechnisch mit einer Datenbusleitung 10 verbunden. Die Datenbusleitung 10 ist im gezeigten Fall als Bustopologie verlegt, grundsätzlich kommen jedoch für die erfindungsgemäße Fördervorrichtung auch andere Netzwerktopologien in Betracht, wie eine Ring-Stern- oder Baumtopologie oder Hybridtopologieformen. Über die Datenbusleitung empfangen die Steuerungseinheiten Steuerungssignale, welche zur Ansteuerung der motorbetriebenen Förderrolle und/oder der Sensoren, die an die Steuerungseinheit angeschlossen sind, dienen. Weiterhin können die Steuerungseinheiten MC1 , MC2, MC3 über die Datenbusleitung 10 Datensignale an eine zentrale Steuerung oder an andere Steuerungseinheiten MC1 , MC2, MC3 senden. Dies können beispielsweise Datensignale sein, die aus einem der Sensoren stammen oder aus einer der motorbetriebenen Förderrollen stammen, die an die jeweilige Steuerungseinheit angeschlossen sind.

Jede der Steuerungseinheiten MC1 , MC2, MC3 ist weiterhin an eine Logikspannungsleitung 20 angeschlossen. Der Anschluss an die Logikspannungsleitung ist ebenfalls in einer Bustopologie ausgeführt, beispielsweise indem die Logikspannungsleitung direkt in eine Ausnehmung am Gehäuse der Steuerungseinheit eingelegt ist und durch zwei oder mehr kontaktierende Stifte, welche die Isolation der Logikspannungsleitung durchdringen, der elektrische Kontakt hergestellt wird. Auch die Topologie der Logikspannungsleitung kann, wie bei der Datenbusleitung, in anderen Anwendungsfällen auch in anderer Struktur erfolgen, bevorzugt ist die Netzwerktopologie der Logikspannungsleitung und der Datenbusleitung identisch. Die Logikspannungsleitung ist im vorliegenden Beispiel als eine Spannungsleitung mit 24 Volt beaufschlagt und versorgt jede der Steuerungseinheiten mit dieser Spannung von 24 Volt. Diese Logikspannung von 24 Volt dient dazu, um innerhalb jeder der Steuerungseinheiten die Steuerungsprozesse, die Verarbeitung von Datensignalen und gegebenenfalls auch Speicherung von Datensignalen zu betreiben und aufrechtzuerhalten. Mit dieser Logikspannungsversorgung von 24 Volt können zudem auch die Sensoren S1 ... S4 mit Spannung versorgt werden und es können, sofern vorhanden, sensorische Komponenten, die an einer der Motorrollen M1 ... M4 angeordnet sind, mit dieser Logikspannungsversorgung versorgt werden. An die Logikspannungsversorgung wird aus diesem Grund keine hohe Anforderung hinsichtlich der übertragbaren elektrischen Energie gestellt, sodass die Logikspannungsversorgungsleitung mit einem kleinen Querschnitt ausgeführt sein kann.

Jede der Steuerungseinheiten ist zusätzlich an eine Energieversorgungsleitung 30 angeschlossen. Auch hier ist der Anschluss über eine Bustopologie realisiert, was beispielsweise ebenso wie bei der Logikspannungsleitung mittels Durchdringungstechnik ausgeführt sein kann. Auch für die Energieversorgungsleitung kann eine andere Topologie verwendet werden, wie zuvor erläutert und es ist bevorzugt, die Topologie der Energie- Versorgungsleitung identisch zu der Topologie der Datenbusleitung und/oder der LogikSpannungsleitung auszuführen. Die Energieversorgungsleitung kann erfindungsgemäß mit einer ersten Spannung von 24 Volt oder mit einer zweiten Spannung von 48 Volt beaufschlagt sein. Die Energieversorgungsleitung dient dazu, um eine Betriebsspannung oder Antriebsspannung an die motorbetriebenen Förderrollen M1 ... M4 zu leiten. Diese Antriebsspannung dient dazu, um den Antrieb innerhalb der motorbetriebenen Förderrollen mit Energie zu versorgen und erfordert aus diesem Grund eine höhere elektrische Energie als die Logikspannungsversorgung aus der Logikspannungsleitung 20.

Grundsätzlich ist zu verstehen, dass die Logikspannungsversorgungsleitung und die Energieversorgungsleitung als separate Leitungen ausgeführt sind. Ebenso kann, wie im Ausführungsbeispiel, die Datenbusleitung als separate Leitung ausgeführt sein, jedoch ist es auch möglich, Datensignale über die Logikspannungsversorgungsleitung oder die Energieversorgungsleitung oder beide zu senden und die Datenbusleitung hierdurch einzusparen bzw. integral mit der Logikspannungsversorgungsleitung oder der Energieversorgungsleitung auszuführen. Grundsätzlich ist weiterhin zu verstehen, dass die Datenbusleitung, die Logikspannungsversorgungsleitung und die Energieversorgungsleitung jeweils als gesonderte Leitungsstränge verlegt sein können oder zwei oder drei dieser Leitungen gebündelt zu einem Mehrfachleitungsstrang ausgeführt sein können.

Die Energieversorgungsspannung wird den Antrieben der motorbetriebenen Förderrollen über die Steuerungseinheiten zugeführt. Die Steuerungseinheiten MC1 , MC2, MC3 sind dazu ausgebildet, um alternativ die erste Energieversorgungsspannung von 24 Volt oder die zweite Energieversorgungsspannung von 48 Volt an die motorbetriebenen Förderrollen zu leiten. Auf diese Weise können motorbetriebene Förderrollen, deren Antriebsleistung mit einer Antriebsspannung von 24 Volt versorgt wird und/oder motorbetriebene Förderrollen, deren Antriebsleistung mit einer Antriebsspannung von 48 Volt bereitgestellt wird, an die Steuerungseinheit angeschlossen werden. Dabei ist es grundsätzlich möglich, dass motorbetriebene Förderrollen mit nur einer der beiden möglichen Antriebsspannungen angeschlossen sind, die dann entsprechend mit der Antriebsspannung versorgt werden, die in der Energieversorgungsleitung anliegt. Alternativ hierzu kann in der Energieversorgungsleitung auch die zweite Antriebsspannung von 48 Volt anliegen und die Steuerungseinheiten können versorgt werden, um motorbetriebene Förderrollen mit dieser zweiten Spannung zu versorgen und um zugleich auch motorbetriebene Förderrollen, die an diese Steuerungseinheit angeschlossen sind, mit der ersten Spannung zu versorgen. In diesem Fall ist die Steuerungseinheit dazu ausgebildet, um die zweite Antriebsspannung von 48 Volt so zu transformieren, dass daraus eine erste Antriebs- Spannung von 24 Volt für diese motorbetriebenen Förderrollen bereitgestellt wird. Dies kann beispielsweise im Wege einer Spannungsteilung oder eines Gleichspannungswandlers ausgeführt sein.

Im Falle einer notwendigen sofortigen und sicheren Abschaltung der Fördervorrichtung kann bei der erfindungsgemäßen Ausführung die Spannungsversorgung über die Energieversorgungsleitung unterbrochen werden, sodass keine Antriebsspannung mehr an der Energieversorgungsleitung anliegt. In diesem Fall erfolgt sofortig keine Versorgung der motorbetriebenen Förderrollen mit Antriebsspannung, sodass diese sofortig zum Stillstand kommen. In dieser Situation kann die Logikspannungsleitung weiterhin mit 24 Volt beaufschlagt bleiben, sodass einerseits ein Datenverlust vermieden werden kann und die gesamte Fördervorrichtung hinsichtlich der Steuerungsdaten angestellt und in Operation bleibt. Dies ermöglicht es, die Fördervorrichtung nach einem solchen Stopp erneut wieder in Förderbewegung zu versetzen, ohne dass hierfür ein tatsächlicher steuerungstechnischer Neustart oder Anlaufprozess ausgeführt werden muss. Insbesondere können durch diese aufrechterhaltene Logikversorgungsspannung etwaige Sensor- daten, daraus generierte Steuerungsdaten und etwaige Steuerungsprozesse in exakt der Weise und ab dem Zeitpunkt fortgeführt werden, die bzw. der dem Zeitpunkt des sofortigen Stopps entspricht.

## Patentansprüche

1. Steuerungsvorrichtung für eine Fördervorrichtung, umfassend:
- eine Steuerungseinheit (MC1, MC2, MC3), die ausgebildet ist, um Steuersignale für eine Fördervorrichtung zu generieren,
- eine Datenschnittstelle, die ausgebildet ist für eine Signalübertragung von Steuersignalen zu der Steuerungseinheit,
- eine erste Energieschnittstelle die ausgebildet ist für eine Energiezufuhr zu der Steuerungseinheit,
- eine Anschlussschnittstelle, die ausgebildet ist zum Herstellen einer Signalsteuerungsverbindung und einer Energieversorgungsverbindung zwischen der Steuerungseinheit und einer außerhalb der Steuerungsvorrichtung angeordneten Fördereinrichtung,
umfassend ferner eine zweite Energieschnittstelle, die ausgebildet ist für eine Energiezufuhr zu der Steuerungseinheit, wobei
- die erste Energieschnittstelle ausgebildet ist, um eine Energieversorgung in Form einer Spannungsversorgung mit einer ersten Spannung zu empfangen,
- die zweite Energieschnittstelle ausgebildet ist, um eine Energieversorgung in Form einer Spannungsversorgung mit einer zweiten Spannung oder anstelle der zweiten Spannung mit einer dritten Spannung, deren Höhe von der Höhe der zweiten Spannung verschieden ist, zu empfangen,
**dadurch gekennzeichnet,**
**dass** die Steuerungseinheit dazu ausgebildet ist, um alternativ eine Energieversorgungsspannung von 24 Volt oder eine Energieversorgungsspannung von 48 Volt an motorbetriebene Förderrollen zu leiten, so dass motorbetriebene Förderrollen, deren Antriebsleistung mit einer Antriebsspannung von 24 Volt versorgt wird und motorbetriebene Förderrollen, deren Antriebsleistung mit einer Antriebsspannung von 48 Volt bereitgestellt wird, an die Steuerungseinheit angeschlossen werden können, und
**dass** die Steuerungseinheit dazu ausgebildet ist, die zweite bzw. dritte Spannung direkt an die Anschlussschnittstelle weiterzuleiten, um eine daran angeschossene Fördereinrichtung zu versorgen,
wobei die Fördereinrichtung eine motorbetriebene Förderrolle ist.

2. Steuerungsvorrichtung nach Anspruch 1,
**dadurch gekennzeichnet,**
**dass** die Steuerungseinheit ausgebildet ist, um Steuerungsfunktionen mit der ersten Spannung auszuführen und um die an der zweiten Schnittstelle zugeführte zweite bzw. dritte Spannung über die Anschlussschnittstelle als Energieversorgung der Fördervorrichtung zuzuführen.

3. Steuerungsvorrichtung nach einem der vorhergehenden Ansprüche,
**dadurch gekennzeichnet,**
**dass** die Steuerungseinheit eine elektronische Fehlererkennungseinheit umfasst, die ausgebildet ist, um mit einer Spannung in Höhe der zweiten oder dritten Spannung aus der ersten Schnittstelle versorgt zu werden und eine Fehlanschlussfunktion zu erzeugen, wenn an der ersten Schnittstelle eine Spannung zugeführt wird, deren Höhe von der Höhe der ersten Spannung verschieden ist.

4. Steuerungsvorrichtung nach Anspruch 3,
**dadurch gekennzeichnet,**
**dass** die Fehlanschlussfunktion bewirkt, dass die Span-nung in Höhe der zweiten bzw. dritten Spannung nicht an eine logische Steuerungsschaltung, die in die Steuerungseinheit integriert und zur Steuerung der För-dervorrichtung ausgebildet ist, weitergeleitet wird.

5. Steuerungsvorrichtung nach einem der vorhergehenden Ansprüche 3 oder 4, **gekennzeichnet durch**
eine Peripherieanschlussschnittstelle, die ausgebildet ist zum Herstellen einer Signalsteuerungsverbindung und einer Energieversorgungsverbindung zwischen der Steuerungseinheit und einer außerhalb der Steuerungsvorrichtung angeordneten Peripherieeinheit, insbesondere einem Sensor,
wobei die Fehlanschlussfunktion bewirkt, dass die Spannung in Höhe der zweiten bzw. dritten Spannung nicht über die Peripherieanschlussschnittstelle an die Peripherieeinheit weitergeleitet wird.

6. Steuerungsvorrichtung nach einem der vorhergehenden Ansprüche,
**dadurch gekennzeichnet,**
**dass** die Höhe der zweiten Spannung und die Höhe der ersten Spannung gleich ist.

7. Steuerungsvorrichtung nach einem der vorhergehenden Ansprüche,
**dadurch gekennzeichnet,**
**dass** die Anschlussschnittstelle durch eine Logikanschlussschnittstelle und eine hiervon getrennte Energieanschlussschnittstelle gebildet wird.

8. Steuerungsvorrichtung nach einem der Ansprüche 1 bis 6,
**dadurch gekennzeichnet,**
**dass** die Anschlussschnittstelle eine Logikanschlussschnittstelle und eine Energieanschlussschnittstelle integral umfasst.

## Claims

1. A control device for a conveying device, comprising::
- a control unit (MC1, MC2, MC3), which is designed to generate control signals for a conveying device,
- a data interface, which is designed for a signal transmission of control signals to the control unit,
- a first energy interface, which is designed to supply energy to the control unit,
- a connection interface, which is designed to establish a signal control connection and an energy supply connection between the control unit and a conveying device arranged outside of the control device,
further comprising a second energy interface, which is designed to supply energy to the control unit, wherein
- the first energy interface is designed to receive an energy supply in the form of a voltage supply with a first voltage,
- the second energy interface is designed to receive an energy supply in the form of a voltage supply with a second voltage or with a third voltage instead of the second voltage, whose level differs from the level of the second voltage,
**characterized in that**
the control unit is designed to alternatively conduct an energy supply voltage of 24 volts or an energy supply voltage of 48 volts to motorized conveyor rollers, so that motorized conveyor rollers, whose drive power is supplied with a drive voltage of 24 volts and motorized conveyor rollers whose drive power is provided with a drive voltage of 48 volts, can be connected to the control unit, and
that the control unit is designed to relay the second or third voltage directly to the connection interface, so as to supply a conveying device connected thereto,
wherein the conveying device is a motorized conveyor roller.

2. The control device according to claim 1,
**characterized in that**
the control unit is designed to execute control functions with the first voltage, and to feed the second or third voltage fed to the second interface to the conveying device via the connection interface as the energy supply.

3. The control device according to one of the preceding claims,
**characterized in that**
the control unit comprises an electronic error detection unit, which is designed to be supplied with a voltage at the level of the second or third voltage from the first interface, and to generate a faulty connection function if a voltage whose level differs from the level of the first voltage is fed to the first interface.

4. The control device according to claim 3,
**characterized in that**
the faulty connection function causes the voltage at the level of the second or third voltage to not be relayed to a logical control circuit, which is integrated into the control unit and designed to control the conveying device.

5. The control device according to one of the preceding claims 3 or 4,
**characterized by**
a peripheral connection interface, which is designed to establish a signal control connection and an energy supply connection between the control unit and a peripheral unit arranged outside of the control device, in particular a sensor, wherein the faulty connection function causes the voltage at the level of the second or third voltage to not be relayed to the peripheral unit via the peripheral connection interface.

6. The control device according to one of the preceding claims,
**characterized in that**
the level of the second voltage and the level of the first voltage are identical.

7. The control device according to one of the preceding claims,
**characterized in that**
the connection interface is formed by a logical connection interface and an energy connection interface separate therefrom.

8. The control device according to one of claims 1 to 6,
**characterized in that**
the connection interface integrally comprises a logical connection interface and an energy connection interface.

## Revendications

1. Dispositif de commande pour un dispositif de transport, comprenant:
- une unité de commande (MC1, MC2, MC3), qui est constituée pour générer des signaux de commande pour un dispositif de transport,
- une interface de données, qui est constituée pour une transmission de signaux de signaux de commande vers l'unité de commande,
- une première interface d'énergie, qui est constituée pour un apport d'énergie à l'unité de commande,
- une interface de connexion, qui est constituée pour établir une liaison de commande de signaux et une liaison d'alimentation d'énergie entre l'unité de commande et un système de transport disposé en dehors du dispositif de commande,
comprenant en plus une deuxième interface d'énergie, qui est constituée pour un apport d'énergie à l'unité de commande, sachant que
- la première interface d'énergie est constituée, pour recevoir une alimentation d'énergie sous la forme d'une alimentation de tension avec une première tension,
- la deuxième interface d'énergie est constituée pour recevoir une alimentation d'énergie sous la forme d'une alimentation de tension avec une deuxième tension ou à la place de la deuxième tension avec une troisième tension, dont le niveau est différent du niveau de la deuxième tension,
**caractérisé en ce que**,
l'unité de commande est constituée pour faire passer alternativement une tension d'alimentation d'énergie de 24 Volt ou une tension d'alimentation d'énergie de 48 Volt sur des rouleaux de transport motorisés de telle manière que les rouleaux de transport motorisés, dont la puissance d'entraînement est alimentée avec une tension d'entraînement de 24 Volt et des rouleaux de transport motorisés, dont la puissance d'entraînement est fournie avec une tension d'entraînement de 48 Volt, peuvent être raccordés à l'unité de commande, et
**en ce que** l'unité de commande est constituée pour transmettre la deuxième ou la troisième tension directement à l'interface de connexion pour alimenter un système de transport qui y est raccordé,
sachant que le système de transport est un rouleau de transport motorisé.

2. Dispositif de commande selon la revendication 1,
**caractérisé en ce que**,
l'unité de commande est constituée pour exécuter des fonctions de commande avec la première tension et pour acheminer la deuxième ou la troisième tension acheminée à la deuxième interface par le biais de l'interface de connexion en tant qu'alimentation d'énergie du dispositif de transport.

3. Dispositif de commande selon l'une quelconque des revendications précédentes,
**caractérisé en ce que**,
l'unité de commande comprend une unité d'identification de défauts électronique, qui est constituée pour être alimentée avec une tension au niveau de la deuxième ou troisième tension à partir de la première interface et générer une fonction de connexion erronée, lorsqu'une tension est acheminée à la première interface, dont le niveau est différent du niveau de la première tension.

4. Dispositif de commande selon la revendication 3,
**caractérisé en ce que**,
la fonction de connexion erronée agit en ce sens que la tension au niveau de la deuxième ou de la troisième tension n'est pas transmise à un circuit de commande logique, qui est intégré dans l'unité de commande et est constitué pour commander le dispositif de transport.

5. Dispositif de commande selon l'une quelconque des revendications 3 ou 4, **caractérisé par**
une interface de connexion de périphérique qui est constituée pour établir une liaison de commande de signaux et une liaison d'alimentation d'énergie entre l'unité de commande et une unité de périphérique disposée en dehors du dispositif de commande, en particulier un capteur,
sachant que la fonction de connexion erronée agit en ce sens que la tension au niveau de la deuxième ou troisième tension n'est pas transmise à l'unité de connexion de périphérique par le biais de l'interface de connexion de périphérique.

6. Dispositif de commande selon l'une quelconque des revendications précédentes,
**caractérisé en ce que**,
le niveau de la deuxième tension et le niveau de la première tension sont identiques.

7. Dispositif de commande selon l'une quelconque des revendications précédentes,
**caractérisé en ce que**,
l'interface de connexion est formée par une interface de logique et une interface d'énergie séparée de celle-ci.

8. Dispositif de commande selon l'une quelconque des revendications 1 à 6,
**caractérisé en ce que**,
l'interface de connexion comprend intégralement une interface de logique et une interface de connexion d'énergie.
